Europäisches Patentamt

European Patent Office

Office européen des brevets

(19)

(11) Veröffentlichungsnummer: **0 342 425**
A2

## (12) EUROPÄISCHE PATENTANMELDUNG

(21) Anmeldenummer: **89107853.7**

(22) Anmeldetag: **29.04.89**

(51) Int. Cl.⁴: **B29C 45/67**

(30) Priorität: **19.05.88 AT 1305/88**

(43) Veröffentlichungstag der Anmeldung:
**23.11.89 Patentblatt 89/47**

(84) Benannte Vertragsstaaten:
**BE CH DE FR GB IT LI NL SE**

(71) Anmelder: **Engel Maschinenbau Gesellschaft m.b.H.**

**A-4311 Schwertberg(AT)**

(72) Erfinder: **Leonhartsberger, Heinrich**
**Pergerstrasse 13**
**A-4311 Schwertberg(AT)**

(74) Vertreter: **Hofinger, Engelbert et al**
**Torggler-Hofinger Wilhelm-Greil-Strasse 16**
**A-6020 Innsbruck(AT)**

(54) **Schliessmechanismus einer Spritzgiessmaschine.**

(57) Ein Schließmechanismus einer Spritzgießmaschine, mit einer hydraulisch beaufschlagbaren Kolben-Zylinder-Einheit, mittels welcher zwei Teilhübe durchführbar sind, von denen der erste schneller durchfahrbar ist als der zweite. In den Zylinderraum (6) und in einen inneren Zylinderraum (4) des Kolbens (2) der Kolben-Zylinder-Einheit ragt ein Verdrängungsrohr (7), das an einer Stirnwand des Zylinders (1) befestigt und an seinem freien Ende offen ist. Der Kolben (2) ist als Tauchkolben ausgebildet und befindet sich im allseitigen Abstand zur Zylinderwand (5) des Zylinders (1) der Kolben-Zylinder-Einheit. Der Kolben (2) ist in einer Stopfbüchse (15), die mit dem Zylinder (1) verschraubt ist, mit Flansch geführt.

EP 0 342 425 A2

Die Erfindung bezieht sich auf einen Schließmechanismus einer Spritzgießmaschine, mit einer hydraulisch beaufschlagbaren Kolben-Zylinder-Einheit, mittels welcher zwei Teilhübe durchführbar sind, von denen der erste schneller durchfahrbar ist als der zweite, mit einem axial in den Zylinderraum und in einen inneren Zylinderraum des Kolbens der Kolben-Zylinder-Einheit ragenden Verdrängungsrohr, das an einer Stirnwand des Zylinders befestigt und an seinem freien Ende offen ist.

Ein derartiger Schließmechanismus ist beispielsweise aus der anmeldereigenen AT-PS 384 578 bekannt. Mit derartigen Schließmechanismen wird, wie bereits erwähnt, ein erster Teilhub schnell durchfahren, worauf anschließend ein zweiter Teilhub, bei dem eine größere Fläche des Kolbens druckbeaufschlagt wird, wodurch eine größere Kraft erzeugt werden kann, durchfahren wird. Eine praktische Möglichkeit zur Durchführung derartiger Teilhübe bietet das Verdrängungsrohr, welches sowohl in den Zylinder, als auch in einen inneren Zylinder des Kolbens ragt.

Aufgabe der Erfindung ist es, einen derartigen Schließmechanismus dahingehend zu verbessern, daß er wesentlich einfacher herzustellen ist. Weiters soll die Gesamtreibung im Schließsystem wesentlich verringert werden.

Die erfindungsgemäße Aufgabe wird dadurch gelöst, daß der Kolben als Tauchkolben ausgebildet ist und sich im allseitigen Abstand zur Zylinderwand des Zylinders der Kolben-Zylinder-Einheit befindet.

Dadurch, daß sich der Kolben im allseitigen Abstand zur Zylinderwand befindet, muß die Zylinderoberfläche nicht bearbeitet werden, sondern kann im Rohzustand bleiben. Dies bedeutet eine wesentliche Vereinfachung bei dem Bau der Schließvorrichtung. Ein weiterer Vorteil der erfindungsgemäßen Ausführung ist, daß bei Gußkonstruktionen Lunker nicht zum Ausschuß führen.

Ein weiteres Ausführungsbeispiel der Erfindung sieht vor, daß der Kolben mit einem Hydraulikkanal versehen ist, der in den inneren Zylinderraum des Kolbens mündet, wobei der Hydraulikkanal beim von der Hydraulikflüssigkeit beaufschlagten Ende des Kolbens in den inneren Zylinderraum mündet.

Die Ölzufuhr durch diesen Hydraulikkanal ermöglicht, auf konstruktiv einfache Weise, die Rückführung des Kolbens.

Die gute Führung des Kolbens kann dadurch verbessert werden, daß am freien Ende des Verdrängungsrohres ein Führungszylinder ausgebildet ist, auf dem der Kolben mit der Zylinderwand des inneren Zylinderraumes geführt ist.

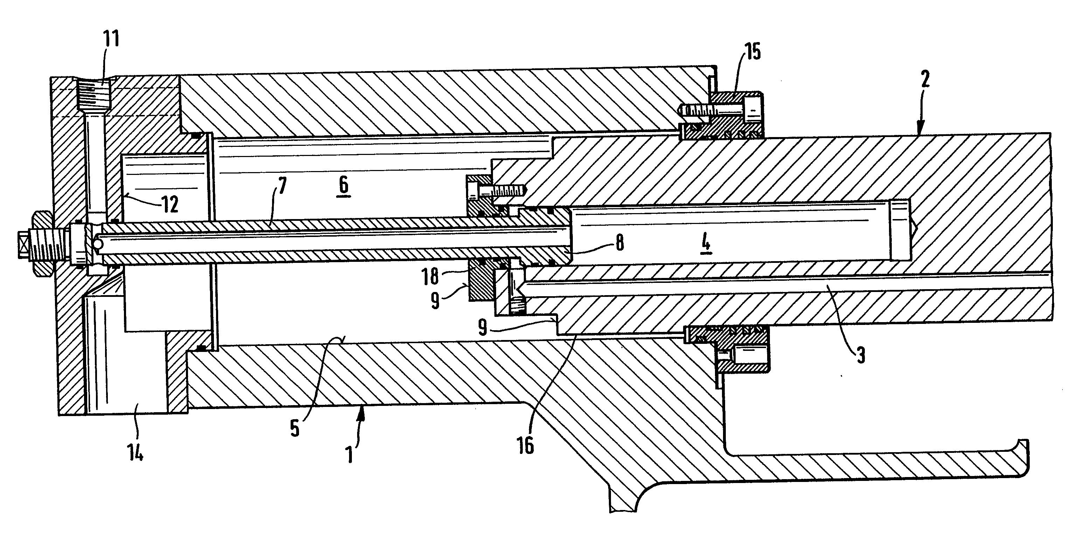

Nachfolgend wird ein Ausführungsbeispiel der Erfindung anhand der beiliegenden Zeichnung beschrieben.

Die nicht unmittelbar zur Erfindung gehörenden Teile der Spritzgießmaschine sind nach dem bekannten Stand der Technik gebaut und daher in der Zeichnung nicht gezeigt.

Die Zeichnung zeigt einen Axialschnitt durch den erfindungsgemäßen Schließmechanismus.

Der erfindungsgemäße Schließmechanismus weist den in bezug auf den Maschinenrahmen ortsfesten Zylinder 1 der Kolben-Zylinder-Einheit und den mit der bewegbaren Formhälfte verbundenen Kolben 2 auf.

Der Kolben 2 ist mit einem inneren Zylinderraum 4 versehen. Von der Stirnwand 12 des Zylinders 1 ragt ein Verdrängungsrohr 7 in den Zylinderraum 6 und in den inneren Zylinderraum 4 des Kolbens 2.

Der Zylinderraum 6 weist einen Anschluß 14 für den Anschluß des Zylinders 1 an eine Ölleitung auf. Über einen Anschluß 11 gelangt Hydraulikflüssigkeit in das Verdrängungsrohr 7 und somit in den inneren Zylinderraum 4 des Kolbens 2.

Der Kolben 2 ist in einer Stopfbüchse 15 geführt, die über ihren Flansch mit dem Zylinder 1 verschraubt sind.

Die Stopfbüchse 15 mit Flansch bildet zugleich einen Anschlag für den ausgefahrenen Kolben 2, wobei der Kolben 2 mit einem Zylinderring 16 an der Stopfbüchse 15 anliegt.

Gegenüber dem Verdrängungsrohr 7 ist der Kolben 2 mit einer Abdeckplatt 18 abgedichtet.

In der Zeichnung ist der Kolben 2 in der ausgefahrenen Stellung gezeichnet. Vor Beginn des Schließhubes befindet sich der Kolben 2 in der anderen Endstellung, d.h. der Kolben 2 ist vollständig in den Zylinderraum 6 eingetaucht und die Platte 18 befindet sich bei oder nahe der Stirnwand 12.

Zur Durchführung des ersten Teilhubes, das ist jener Teilhub, bei dem vom Kolben wenig Kraft aber dafür eine erhöhte Geschwindigkeit verlangt wird, wird Hydraulikflüssigkeit über den Anschluß 11 und das Verdrängungsrohr 7 in den inneren Zylinderraum 4 gepumpt. Somit wird der Kolben 2 nach rechts bewegt. Das Ventil, das den Zufluß der Hydraulikflüssigkeit über den Anschluß 14 in den Zylinderraum 6 reguliert, bleibt dabei offen, so daß mit der Kolbenbewegung gleichzeitig Hydraulikflüssigkeit in den Zylinderraum 6 eingesaugt wird.

Ist der erste Teilhub beendet, d.h. die Form ist geschlossen, dann wird über eine nicht gezeigte Pumpe Hydraulikflüssigkeit über den Anschluß 14 in den Zylinderraum 6 gepumpt und der Kolben 2 wird auf seiner gesamten Stirnwand 9 beaufschlagt.

Selbstverständlich können anstelle des einen Anschlusses 14 auch zwei Anschlüsse vorgesehen sein, wobei durch einen Anschluß Hydraulikflüssigkeit während des zweiten Teilhubes, d.h. des Krafthubes, in den Zylinderraum 6 gepumpt wird und über den anderen Anschluß während des ersten Teilhubes Hydraulikflüssigkeit in den Zylinderraum 6 nachgesaugt wird.

Zur Rückführung des Kolbens 2 in die Offenstellung wird Hydraulikflüssigkeit über den Hydraulikkanal 3 in den inneren Zylinderraum 4 gepumpt. Gleichzeitig werden die Ventile in den Zulaufleitungen geöffnet, so daß die Hydraulikflüssigkeit sowohl über den Anschluß 11 als auch über den Anschluß 14 entweichen kann.

Am freien Ende des Verdrängungsrohres 7 ist ein Führungszylinder 8 ausgebildet, auf den der Kolben 2 mit der Zylinderwand des inneren Zylinderraumes 4 geführt ist.

## Ansprüche

1. Schließmechanismus einer Spritzgießmaschine, mit einer hydraulisch beaufschlagbaren Kolben-Zylinder-Einheit, mittels welcher zwei Teilhübe durchführbar sind, von denen der erste schneller durchfahrbar ist als der zweite, mit einem axial in den Zylinderraum und in einen inneren Zylinderraum des Kolbens der Kolben-Zylinder-Einheit ragenden Verdrängungsrohr, das an einer Stirnwand des Zylinders befestigt und an seinem freien Ende offen ist, dadurch gekennzeichnet, daß der Kolben (2) als Tauchkolben ausgebildet ist und sich im allseitigen Abstand zur Zylinderwand (5) des Zylinders (1) der Kolben-Zylinder-Einheit befindet.

2. Schließmechanismus nach Anspruch 1, dadurch gekennzeichnet, daß der Kolben (2) mit einem Hydraulikkanal (3) versehen ist, der beim von der Hydraulikflüssigkeit beaufschlagten Ende des Kolbens (2) in den inneren Zylinderraum (4) des Kolbens (2) mündet.

3. Schließmechanismus nach Anspruch 1, dadurch gekennzeichnet, daß am freien Ende des Verdrängungsrohres (7) ein Führungszylinder (8) ausgebildet ist, auf dem der Kolben (2) mit der Zylinderwand des inneren Zylinderraumes (4) geführt ist.

EP 0 342 425 A2